(19)

(11) **EP 2 963 474 A1**

(12) **EUROPÄISCHE PATENTANMELDUNG**

(43) Veröffentlichungstag:
**06.01.2016 Patentblatt 2016/01**

(51) Int Cl.:
***G02B 19/00*** *(2006.01)* ***C03C 3/078*** *(2006.01)*
***F21V 5/04*** *(2006.01)* ***B24C 1/04*** *(2006.01)*

(21) Anmeldenummer: **14175894.6**

(22) Anmeldetag: **05.07.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Swareflex GmbH**
**6134 Vomp (AT)**

(72) Erfinder: **Flir, Anton**
**6134 Vomp (AT)**

(74) Vertreter: **Fabry, Bernd**
**IP2 Patentanwalts GmbH**
**Schlossstrasse 523-525**
**41238 Mönchengladbach (DE)**

(54) **Teilmattierte optische Linsen**

(57) Vorgeschlagen werden optische Linsen mit mindestens einer Lichtaustrittsfläche in ellipsoidartiger Freiform, wobei die Unterseiten planar ausgeformt und mit einer optisch relevanten Ausnehmung zur Aufnahme einer Lichtquelle versehen sind, die sich dadurch auszeichnen, dass die Linsen
(a) aus einem transparenten Material bestehen und
(b) deren Oberflächen ausgehend von der planaren Unterseite in Richtung der optischen Achse zu 1 bis 95 % mattiert sind.

**Abbildung 1a**
Linse mit einer Lichtaustrittsfläche in Form von zwei elliposidartigen Freiformen - Schnitt AA

EP 2 963 474 A1

Printed by Jouve, 75001 PARIS (FR)

**(Forts. nächste Seite)**

A
A

**Abbildung 1b**
Linse mit einer Lichtaustrittsfläche in Form von zwei elliposidartigen Freiformen – Aufsicht

**Abbildung 1c**
Linse mit einer Lichtaustrittsfläche in Form von zwei elliposidartigen Freiformen – Schrägsicht

## Beschreibung

### GEBIET DER ERFINDUNG

Die Erfindung befindet sich auf dem Gebiet der LED Beleuchtungsmittel und betrifft eine Vorrichtung sowie ein Verfahren zur Kompensation des Color-over-Angle Effektes.

### STAND DER TECHNIK

Die weiße LED-Technologie befindet sich an dem Punkt, an dem sie sehr bald konventionelle Lichttechnologien wie beispielsweise kompakte Fluoreszenzlampen ablösen wird, da sie ihnen in Lichtmenge, Lichtqualität und Effizienz weit überlegen ist. Seit dem Start der LED-Entwicklung in den 70er Jahren des vergangenen Jahrhunderts konnte die Lichtausbeute alle 10 Jahre um das 20fache gesteigert werde, während die Produktionskosten sich gleichzeitig um den Faktor 10 verringert haben.

Üblicherweise werden LED nicht einzeln eingesetzt, sondern in so genannte "Light Engines" eingesetzt, Ensembles, die 2, 5, 10 oder noch mehr LED enthalten. LED werden dabei meistens zusammen mit Kollimatoren eingesetzt, die die Aufgabe haben, parallele Strahlen zu erzeugen.

Ein bekanntes und bislang nicht zufriedenstellend gelöstes Problem besteht darin, dass LED kein gleichmäßig weißes Licht emittieren. "Weiße" LED werden hergestellt, indem man eine blaue LED mit einer Schicht eines gelben Phosphors und gegebenenfalls zusätzlich auch noch mit einer Schicht roten Phosphors überzieht. Der Phosphor hat die Aufgabe, einen Teil des blauen Lichtes in gelbes oder rotes Licht umzuwandeln, so dass dabei weißes Licht resultiert. Der Anteil des Lichtes, der umgewandelt wird, hängt von der Wegstrecke ab, die ein Lichtstrahl durch den Phosphor nehmen muss, was wiederum davon abhängig ist, in welchem Winkel relativ zur optischen Achse das Licht emittiert wird. Daraus folgt, dass die Farbe des emittierten Lichtes winkelabhängig ist: Licht, das in engem Winkel abgestrahlt wird, ist weiß-bläulich, Licht, das hingegen in breitem Winkel emittiert wird, hat einen Gelb_ oder Gelbrotstich. Dieses Phänomen wird als "Color-over-Angle" (CoA) bezeichnet.

Der ungleichmäßige Farbverlauf bei "weißen" LED ist in der Regel unerwünscht und in den letzten Jahren wurde viel Aufwand geleistet, um den CoA-Affekt zu vermindern. Eine Möglichkeit besteht beispielsweise darin, Luftblasen in die Phosphorschicht einzubauen [vgl. Wu et al. " Improving the performance of mixed-color white LED systems by using scattered photon extraction technique" in: Proc. SPIE, Vol. 6669 (2007)].

In der US7,361,938B2 (MÜLLER) wird als Alternative vorgeschlagen, die LED mit einer zweifarbigen Beschichtung zu versehen, um dadurch die Farbverschiebung wieder auszugleichen.

Gegenstand der WO2011 010 237A1 (PHILIPS) sind LED, bei denen man den Color-over-Angle Effekt dadurch zu vermeiden versucht, dass man über der LED Vorrichtungen zur Umwandlung definierter Wellenlängen anordnet.

Alle diese Maßnahmen weisen jedoch den Nachteil auf, dass sie zum einen die Effizienz der LED vermindern und zum anderen aber die Produktionskosten deutlich erhöhen.

Die Aufgabe der vorliegenden Erfindung hat somit darin bestanden, genau diese Nachteile zu verhindern und statt dessen eine Vorrichtung und ein Verfahren zur Verfügung zu stellen, mit deren Hilfe der CoA-Effekt zumindest weitgehend ausgeglichen werden kann, ohne dass die Effizienz der LED darunter leidet und die Herstellungskosten durch konstruktive Änderungen entweder in der LED selbst oder im Beleuchtungselement signifikant steigen.

### BESCHREIBUNG DER ERFINDUNG

Gegenstand der Erfindung sind optische Linsen mit mindestens einer Lichtaustrittsfläche in ellipsoidartiger Freiform, wobei die Unterseiten planar ausgeformt und mit einer optisch relevanten Ausnehmung zur Aufnahme einer Lichtquelle versehen sind, die sich dadurch auszeichnen, dass die Linsen

(a) aus einem transparenten Material bestehen und

(b) deren Oberflächen ausgehend von der planaren Unterseite in Richtung der optischen Achse zu 1 bis 95 % mattiert sind.

Überraschenderweise wurde gefunden, dass durch die partielle Mattierung der Primäroptikelemente, sprich der Linsen, gerade im Bereich der Lichtemission parallel zur Oberfläche, d.h. senkrecht zur optischen Achse, eine Streuung bewirkt wird, die dazu führt, dass die unerwünschte Farbverschiebung verwischt wird. Damit wird der Color-over-Angle Effekt zwar nicht kompensiert, das optische Ergebnis ist aber so, dass der Betrachter allenfalls noch eine sehr geringe Gelbfärbung an den Rändern der beleuchteten Fläche bemerkt. Der besondere Vorteil der Erfindung besteht indes darin, dass diese Maßnahme keinerlei konstruktive Änderungen erforderlich macht. Die Linsen können vielmehr in einem einfachen und kostengünstigen Arbeitsgang in großer Stückzahl gleichzeitig mattiert werden, wobei die Prozessführung es zulässt, unterschiedliche Mattierungsgrade problemlos einzustellen.

Vorzugsweise bestehen die Linsen nicht aus (weitaus kostengünstigerem) Kunststoff, sondern werden aus Glas hergestellt. Die Mattierung von Glaslinsen führt zu einer Lichtstreuung bei der der CoA-Effekt besonders stark verwischt wird. Vorzugsweise sollten die Gläser auch noch eine definierte Zusammensetzung aufweisen, wie sie weiter unten offenbart wird.

**GEOMETRIE DER LINSEN**

Als optische Linsen bezeichnet man transparente optische Bauelemente mit mindestens zwei lichtbrechenden Flächen, von denen mindestens eine Fläche konvex oder konkav gewölbt ist.

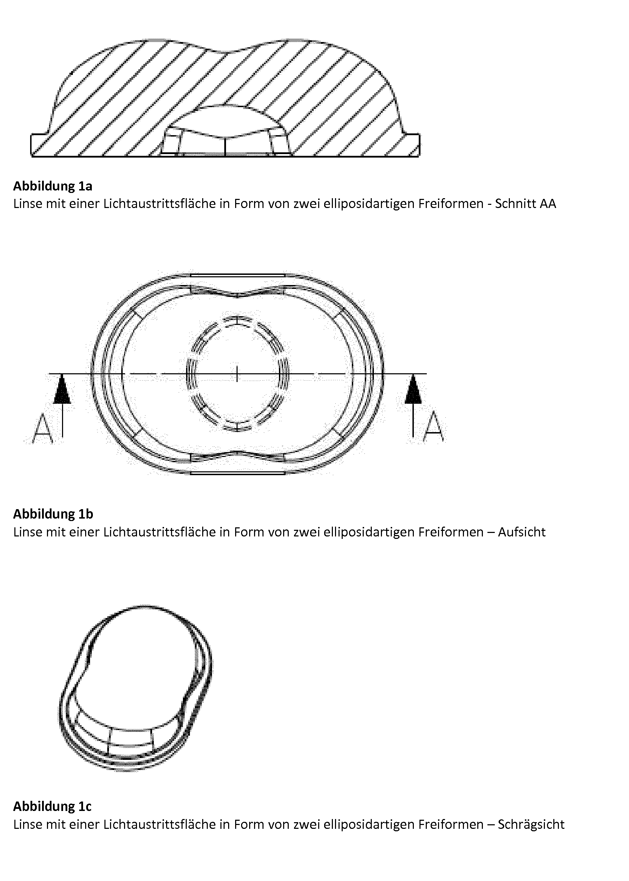

Die Linsen der vorliegenden Erfindung weisen in einer ersten Ausführungsform nur eine Lichtaustrittsfläche in Form einer elliposidartigen Freiform auf, d.h. sie sind einkernig und verfügen nur über eine einzige Kugelhaube. Die Linsen können jedoch in eine alternativen Ausführungsform auch Lichtaustrittsflächen in Form von zwei, drei, vier oder noch weitere ellipsoiden Freiformen aufweisen, also 2, 3, 4 und mehr Kugelhauben besitzen. Eine solche Linse wird exemplarisch in den **Abbildungen 1a** (Schnitt A-A), **1b** (Aufsicht) und **1c** (Schrägansicht) dargestellt. Mehrkernige Linsen sind dann bevorzugt, wenn das Licht von einer Lichtquelle auf unterschiedliche Flächen mit jeweils definierter Lichtstärke gelenkt werden soll.

Den Abbildungen ist ebenfalls zu entnehmen, dass die Linsen etwa mittig angeordnet eine optisch relevante Ausnehmung aufweisen, die von Form und Größe so dimensioniert ist, dass sie die Lichtquelle - beispielsweise eine LED - aufnehmen kann. Die Ausnehmung ist optisch relevant, d.h. sie ist unabdingbar für die Lichtstreuung und weist dabei vorzugsweise -jedoch nicht zwingend - einen kreisförmigen oder ovalen Durchmesser auf, insbesondere handelt es sich um ein kartesisches Oval.

Die optischen Linsen der vorliegenden Erfindung weisen vorzugsweise einen Durchmesser entlang der längsten Achse (x-Achse) von etwa 10 bis etwa 50 mm, vorzugsweise etwa 15 bis etwa 30 mm und insbesondere etwa 18 bis etwa 28 mm auf. Der Durchmesser entlang der kürzeren y und z-Achsen liegt üblicherweise bei etwa 8 bis etwa 25 mm und insbesondere bei etwa 9 bis 20 mm.

Besonders bevorzugt sind optische Linsen, die in Richtung der optischen Achse eine Höhe von etwa 9 bis etwa 20 mm und insbesondere etwa 12 bis etwa 15 mm aufweisen, wobei vorzugsweise der Abstand der Lichteintritts- zur Lichtaustrittsfläche etwa 2 bis etwa 10 mm und insbesondere etwa 5 bis etwa 8 mm betragen sollte.

Wie anspruchsgemäß ausgeführt, handelt es sich bei den optischen Linsen der vorliegenden Erfindung um solche die eine planare Unterseite aufweisen. Das bedeutet, dass die Freiform etwa auf halber Höhe in Richtung der optischen Achse durchtrennt ist, so dass eine glatte Schnittfläche entsteht. Diese ist in einer weiteren bevorzugten Ausführungsform der Erfindung mit einem umlaufenden Rand oder Flansch ausgestattet, wie dies auch in **Abbildung 1a** dargestellt ist. Auf diese Weise wird die Auflagefläche der Linse auf den Träger vergrößert, was ein dichtes Verkleben wesentlich erleichtert.

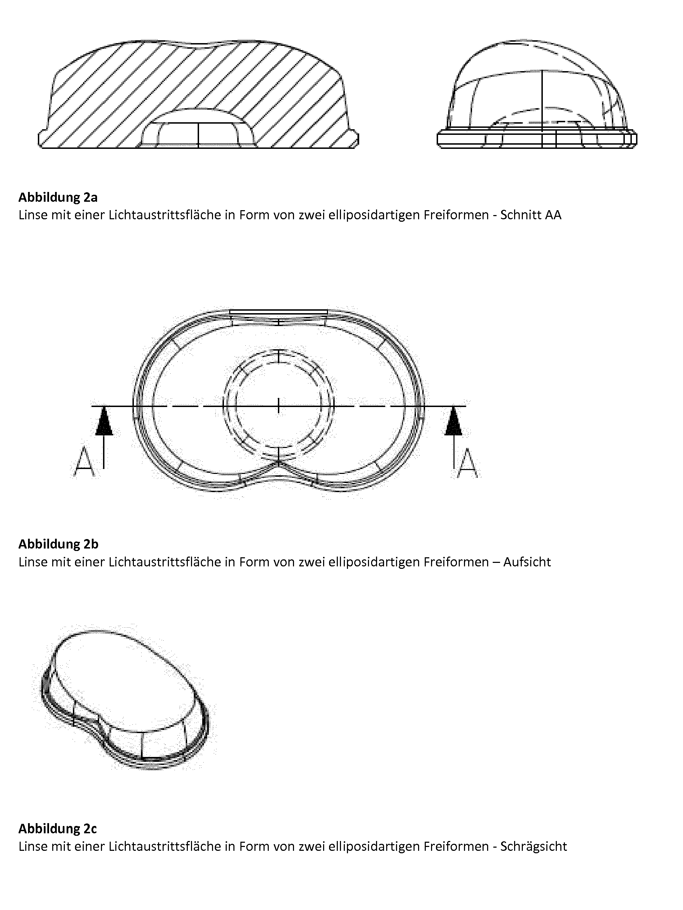

Eine alternative Ausführungsform ist in den **Abbildungen 2a, 2b und 2c** wiedergegeben: auch hier liegt eine Linse vor, bei der die Lichtaustrittsfläche zwei ellipsoidartige Freiformen aufweist. Die beiden Kugelhauben sind dabei bezüglich ihrer Mittelpunkte so nahe aneinander gerückt, dass beinahe wieder eine einzige Kugelhaube resultiert.

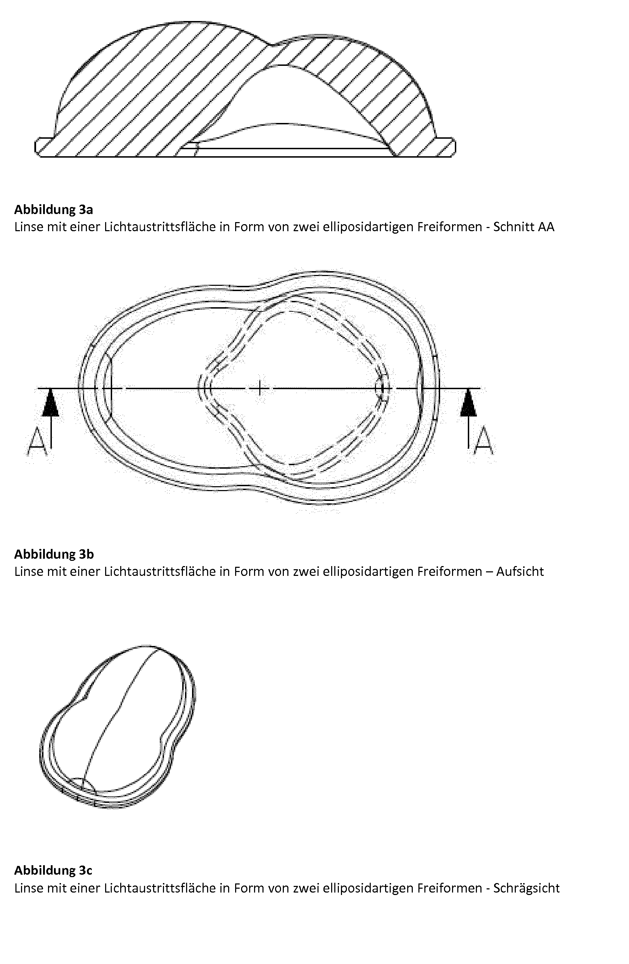

Eine dritte Beispielform zeigen die **Abbildungen 3a, 3b und 3c**, nämlich wiederum eine Linse, bei der die Lichtaustrittsfläche zwei ellipsoidartige Freiformen aufweist, diesmal jedoch mit zwei Kugelhauben unterschiedlicher Größe.

Der Flansch kann dabei in seiner einfachsten Form der Geometrie der Linse folgen, also im Fall einer einkernigen Linse mit nur einer Kugelhaube, bei der die plankonvexe Fläche eine Ellipse darstellt, diese nachbilden. Liegt beispielsweise eine zweikernige Linse mit eben zwei Kugelhauben vor, dann weist die plane Fläche die Form einer Acht auf. Der Flansch kann diese Form nun ebenfalls nachbilden oder aber alternativ wieder eine komplette Ellipse ausbilden, welche die Achterform einschließt. Diese Ausführungsform ist bevorzugt, weil dadurch die Auflagefläche der Linse noch einmal etwas vergrößert wird. Dies wird in den **Abbildungen 1a und 1b** noch einmal illustriert.

In einer dritten Ausführungsform kann der Flansch eine Positionierungshilfe aufweisen, beispielsweise einseitig plan geschliffen sein, d.h. während er der Geometrie der Linse an drei Seiten folgt ist er an der vierten Seite gerade ausgeprägt (vgl. auch **Abbildungen 1b und 2c**). Dies hat den Vorteil, dass man bei den Linsen "rechts" und "links" unterscheiden kann und das richtige Positionieren einfacher wird. Alternativ kann der Flansch mit einer Kerbe oder einer innerhalb oder senkrecht zur Planebene mindestens eine Ausstülpung oder Einstülpung aufweisen.

Der umlaufende Flansch kann eine Breite von etwa 1 bis etwa 2 mm und eine Stärke von ebenfalls etwa 1 bis etwa 2 mm aufweisen.

Im Sinne der vorliegenden Erfindung können die Oberflächen der optischen Linsen ausgehend von der planaren Unterseite in Richtung der optischen Achse in Richtung der folgenden Bereiche mattiert sein (alle Angaben beziehen sich auf den Anteil der Mattierung der Oberfläche):

1 bis 95 > 2 bis 90 > 5 bis 85 > 10 bis 75 > 15 bis 65 > 20 bis 50 > 30 bis 40.

In einer besonders bevorzugten Ausführungsform sind die Oberflächen zu etwa 5 bis etwa 50 % mattiert. Welcher Mattierungsgrad jeweils das beste Ergebnis liefert, wird einzig durch die LED bestimmt und kann vom Fachmann durch Vergleich von drei oder vier unterschiedlichen Linsen schnell ermittelt werden, ohne dass dies einen übermäßigen Aufwand darstellen oder gar erfinderische Tätigkeit verlangen würde.

**MATERIALBESCHAFFENHEIT DER LINSEN**

Für die Herstellung der Linsen kommen grundsätzlich alle transparenten Materialien in Frage. Diese sind vorzugsweise im sichtbaren Bereich transparent, es können aber auch IR-transparente Materialien eingesetzt werden (z.B. für die Beleuchtung von Infrarotkameras). Als Kunststoffe eignen sich PMMA, PP, PVC sowie Silicone.

In einer bevorzugten Ausführungsform der Erfindung bestehen die optischen Linsen aus Glas. Mit Glaslinsen lassen sich die präzisesten Lichteinstrahlungen erreichen und die Anforderungen an die Streuung am besten erfüllen.

Es ist weiterhin vorteilhaft, dass die Gläser Oxide von vier-, zwei- und einwertigen Metallen aufweisen. Die vierwertigen Metalloxide sind dabei ausgewählt aus der Gruppe, die gebildet wird von Siliziumdioxid, Titandioxid und Zirkondioxid, sowie deren Mischungen.

Die zweiwertigen Metalloxide sind ausgewählt aus der Gruppe, die gebildet wird von Calciumoxid, Magnesiumoxid und Zinkoxid sowie deren Mischungen.

Die einwertigen Metalloxide sind ausgewählt aus der Gruppe, die gebildet wird von Natriumoxid, Kaliumoxid und Lithiumoxid sowie deren Mischungen.

Vorzugsweise sind die einzelnen Metalloxide in jeder der drei Gruppen in etwa gleichen Mengen enthalten. Ausnahme bildet die Gruppe der vierwertigen Metalloxide, in denen naturgemäß die Menge an Siliziumdioxid deutlich überragt. Es ist des Weiteren vorteilhaft, wenn die Gläser alle neuen ausdrücklich genannten Oxide enthalten.

Konkrete Beispiele für geeignete Glaszusammensetzungen sind in **Tabelle 1** offenbart. Besonders bevorzugte Zusammensetzungen umfassen:

(a1) etwa 58 bis etwa 63 Gew.-% vierwertige Metalloxide,

(a2) etwa 14 bis etwa 22 Gew.-% zweiwertige Metalloxide,

(a3) etwa 14 bis etwa 20 Gew.-% einwertige Metalloxide,

mit der Maßgabe, dass sich die Mengenangaben zu 100 Gew.-% addieren.

Eine weiter kritische Größe stellt der Brechungsindex $n_D$ dar, der vorzugsweise einen Wert von etwa 1,5 bis etwa 1,6 und insbesondere 1,55 bis 1,58 aufweist.

Vorteilhafterweise besitzen die erfindungsgemäßen Linsen eine Dichte von etwa 2,65 bis etwa 2,75 g/cm$^3$ und insbesondere von etwa 2,68 bis 2,73 g/cm$^3$.

Ebenfalls bevorzugt sind Linsen, die eine definierte Vickershärte von etwa 600 bis etwa 650 HV 0,1/20 aufweisen.

**GLASHERSTELLUNG**

Die Herstellung der speziellen Gläser der vorliegenden Erfindung kann in an sich bekannter Weise erfolgen; kritisch ist allein die Mischung der Einsatzstoffe, wie sie oben angegeben ist. Die Herstellung umfasst daher zunächst die Rauhschmelze, die das Einschmelzen des Gemenges und seine Homogenisierung umfasst, gefolgt von der Läuterung, bei die Gase ausgetrieben werden und schließlich das Abstehen, bei dem die Schmelze auf die gewünschte Formgebungstemperatur abgekühlt wird.

Das Gemenge wird der Schmelzwanne mit einer Einlegemaschine am Einlegevorbau, dem Doghouse, aufgegeben. Da das Gemenge eine geringere Dichte als die Glasschmelze besitzt, schwimmt dieses auf der Schmelze und bildet den sogenannten Gemengeteppich. Bei Temperaturen von ca. 1400 °C und mehr schmelzen die verschiedenen Bestandteile langsam auf. Einige der Gemengebestandteile können zusammen Eutektika bilden und bereits bei wesentlich geringeren Temperaturen erste Schmelzphasen bilden. Die Konvektion im Glasbad bewirkt einen kontinuierlichen Abtransport von Material, das sich vom Gemengeteppich löst. Gleichzeitig bewirkt sie eine Erwärmung des Gemenges. Somit erzeugt sie sowohl eine thermische, als auch eine chemische Homogenität der Schmelze. Diese kann durch ein Bubbling, die Eindüsung von Luft oder Gasen in die Schmelze, unterstützt werden.

Im Läuterbereich, der dem Schmelzbereich unmittelbar folgt, und häufig auch durch einen Wall in der Schmelze von diesem getrennt ist, werden in der Schmelze verbliebene Gase ausgetrieben. Zu diesem Zweck wird dem Gemenge zuvor ein sogenanntes Läutermittel zugegeben. Dieses Läutermittel zersetzt sich bei einer bestimmten Temperatur unter Gasbildung. Aufgrund von Partialdruckdifferenzen diffundieren nun Gase aus der Schmelze in die Läutermittel-Gasblasen ein, welche dadurch anwachsen und aufsteigen. Um diesen Prozess in wirtschaftlich vertretbaren Zeiten durchführen zu können, herrschen im Läuterteil einer Glasschmelzwanne ähnlich hohe Temperaturen wie im Schmelzteil, weil eine zu hohe Viskosität der Schmelze das Aufsteigen der Gasblasen stark verlangsamen würde. Da die Läuterung bestimmend für die Glasqualität ist, gibt es vielfältige unterstützende Maßnahmen.

Dem Läuterbereich schließt sich die baulich klar getrennte Arbeitswanne an. Da für die Formgebung niedrigere Temperaturen als zur Schmelze und Läuterung nötig sind, muss das Glas vorher abstehen. Daher spricht man auch von Abstehwanne. Der Kanal, der Schmelzwanne und Arbeitswanne verbindet, heißt Durchlass und arbeitet nach dem Siphonprinzip. Bei Flachglaswannen sind Schmelz- und Arbeitswanne nur durch eine Einschnürung getrennt, da ein Durchlass eine optische Unruhe im Fertigprodukt entstehen ließe.

Von der Arbeitswanne fließt das Glas weiter zum Entnahmepunkt, wo dann die Formgebung stattfindet. Bei der Produktion von Hohlglas sind dieses die Speiser oder Feeder. Hier werden Tropfen erzeugt, die über ein Rinnensystem in darunter stehende Glasmaschinen geleitet werden.

In jedem Glasgegenstand entstehen bei der Formgebung mechanische Spannungen als Folge einer Zwangsformgebung oder Dehnungsunterschiede im Material aufgrund von Temperaturgradienten. Diese Spannungen lassen sich mit optischen Spannungsprüfern unter polarisiertem Licht geometrisch messen (Spannungsdoppelbrechung). Die Spannungsanfälligkeit hängt vom Ausdehnungskoeffizienten des jeweiligen Glases ab und muss thermisch ausgeglichen werden.

Für jedes Glas lässt sich ein Kühlbereich festlegen, welcher von der so genannten oberen und unteren Kühltemperatur begrenzt wird. Die Lage dieser Temperaturen definiert sich nach der Viskosität, so ist die obere Kühltemperatur diejenige Temperatur bei der das Glas eine Viskosität von $10^{12}$ Pas besitzt. Bei der unteren Kühltemperatur liegt eine Viskosität 10 Pas vor. In der Regel erstreckt sich der Kühlbereich für die Gläser der vorliegenden Erfindung zwischen 590 °C und 450 °C. Die Spannungen verringert man durch Tempern, also durch definiertes langsames Abkühlen im Kühlbereich, da bei den hier vorherrschenden Viskositäten eine Spannungsrelaxation gerade noch möglich ist und bleibende Spannungen im Glaskörper vermieden werden.

Die Zeit, in der ein Glasgegenstand den Kühlbereich durchlaufen kann, hängt maßgeblich von der je nach Glasart zu überbrückenden Temperatur und der Stärke (Dicke) des Gegenstands ab. Im Hohlglasbereich sind dies zwischen 30 und 100 Minuten.

An diesen Vorgang kann sich die Veredlung der Glasoberfläche ansprechen. Unter einer Oberflächenveredelung versteht man sowohl das Aufbringen von Schichten als auch das Abtragen von Schichten, sowie das Modifizieren der Struktur oder der Chemie der Glasoberfläche. Sinn und Zweck solcher Maßnahmen ist die Verbesserung der bestehenden Gebrauchseigenschaften eines Glasgegenstandes oder die Erzeugung neuer Anwendungsgebiete für einen Glasgegenstand. Durch chemische und physikalische Gasphasenabscheidung können feinste Metallbeschichtungen aufgebracht werden. Die Beschichtung mit dielektrischem Material, das selbst durchsichtig ist, aber einen vom Glasträger abweichenden Brechungsindex aufweist, ermöglicht sowohl Verspiegelungen als auch eine Entspiegelung. Dies wird bei der Herstellung von Brillengläsern und Linsen für Fotoapparate eingesetzt, um störende Reflexionen zu vermindern. Für wissenschaftliche Zwecke werden Schichten hergestellt, die mehr als 99,9999 % des einfallenden Lichts einer bestimmten Wellenlänge reflektieren. Umgekehrt kann auch erreicht werden, dass 99,999 % des Lichts die Oberfläche passieren.

## HERSTELLVERFAHREN

Ein weiterer Gegenstand der Erfindung betrifft ein Verfahren zur Herstellung der erfindungsgemäßen teilmattierten Linsen, bei dem man diese

(a) zunächst soweit mit einem gegebenenfalls reversiblen Überzug versieht und dadurch den der Teil der Oberfläche schützt, für den keine Mattierung gewünscht wird,

(b) die verbliebene ungeschützte Oberfläche der Linse durch chemische oder physikalische Behandlung mattiert, und

(c) gegebenenfalls den Überzug wieder entfernt.

Bei dem Überzug kann es sich beispielsweise um einen Lack oder ein Klebeband handeln.

Die Mattierung kann durch chemische Behandlung, mechanische Abrasion und/oder Laserbehandlung erfolgt. Zu den bevorzugten Mattierungsverfahren gehören das Sandstrahlen und die Behandlung mit Flusssäure. Im Sinne der Erfindung bedeutet Mattierung eine Verminderung der Lichtdurchlässigkeit der Linsen um einen Betrag von mindestens 10 % im Vergleich zu einer unmattierten Linse.

In einer bevorzugten Ausführungsform der Erfindung werden die Linsen in größerer Stückzahl mit ihrer planen Fläche auf einen Träger aufgebracht, z.B. durch reversible Verklebung, und kopfüber in ein Bad getaucht, das eine transparente Schutzflüssigkeit enthält. Die Linsen werden dabei gerade so tief eingetaucht, wie schließlich eine nicht-mattierte Schicht verbleiben soll. Das Tauchbad enthält einen, der die Linsenoberfläche vor der folgenden chemischen oder physikalischen Behandlung, d.h. vor der Mattierung schützt. Werden die so vorbehandelten Linsen nach dem Trocknen beispielsweise einem Sandstrahlgebläse ausgesetzt, wird nur genau der Teil der Oberfläche mattiert, der durch den Lack nicht geschützt ist. Anschließend wird der Lack wieder entfernt.

Das Verfahren bietet eine Vielzahl von Vorteilen:

- Es können eine Vielzahl von Linsen gleichzeitig mattiert werden;
- Das Verfahren ist schnell und kostengünstig durchzuführen;
- Durch Kontrolle der Eintauchtiefe lassen sich beliebige Grade der Oberflächenmattierung zuverlässig einstellen.

## GEWERBLICHE ANWENDBARKEIT

### VERMINDERUNG DES COA EFFEKTES

Ein weiterer Gegenstand der Erfindung betrifft ein Verfahren zur Verminderung des Color-over-Angle Effektes bei LED, bei dem man die LED mit er der erfindungsgemäßen Linsen kombiniert, deren Oberfläche ausgehend von der planaren Unterseite in Richtung der optischen Achse zu 1 bis 95 % mattiert ist.

### BELEUCHTUNGSVORRICHTUNG

Ein weiterer Gegenstand der Erfindung betrifft Beleuchtungselement, umfassend oder bestehend aus einem Träger, mindestens einer Lichtquelle sowie mindestens einer erfindungsgemäßen teilmattierten Linse.

### LEUCHTELEMENTE

Auch wenn im Rahmen der vorliegenden Erfindung in der Regel von LED die Rede ist, so ist die Erfindung doch nicht auf die Ausführungsform des Leuchtelementes als LED beschränkt. Tatsächlich kann es sich dabei ebenso um eine OLED, eine LET oder eine OLET handeln.

### LED

LED, auch als Leuchtdioden bezeichnet, stellen lichtemittierende HalbleiterBauelemente dar, deren elektrische Eigenschaften denen einer Diode entspreche. Fließt durch die Diode elektrischer Strom in Durchlassrichtung, so strahlt sie Licht, IR-Strahlung und UV-Strahlung mit einer vom Halbleitermaterial und dessen Dotierung anhängigen Wellenlänge ab.

Der Halbleiterkristall vieler Leuchtdioden ist auf den Boden einer kegelförmigen Vertiefung in einem Metallhalter gelötet. Die Innenseiten der Vertiefung wirken als Reflektor für das aus den Seiten des Kristalls austretende Licht. Die Lötstelle bildet einen der beiden elektrischen Anschlüsse des Kristalls. Gleichzeitig nimmt sie die Abwärme auf, die entsteht, weil der Halbleiterkristall nur einen Teil der elektrischen Leistung in Licht umsetzt. Der Halter mit dem Reflektor ist bei bedrahteten Leuchtdioden als Draht mit rechteckigem Querschnitt ausgeführt, der als elektrischer Anschluss dient. Anders als sonst bei Elektronikbauteilen üblich besteht der Anschlussdraht nicht aus verzinntem Kupfer, sondern aus verzinntem Stahl. Die Wärmeleitfähigkeit von Stahl ist vergleichsweise gering. Dadurch wird der Halbleiterkristall beim Einlöten des Bauteils in eine Leiterplatte nicht durch Überhitzung zerstört. Die Oberseite des Kristalls ist nur durch einen dünnen Bonddraht elektrisch mit dem zweiten Stahlanschlussdraht verbunden, damit der Anschluss nur sehr wenig der lichtemittierenden Oberfläche verdeckt.

Hochleistungs-Leuchtdioden (H-LED) werden mit höheren Strömen als 20 Milliampere betrieben. Es entstehen besondere Anforderungen an die Wärmeableitung, die sich in speziellen Bauformen ausdrücken. Die Wärme kann über die Stromzuleitungen, die Reflektorwanne oder in den Leuchtdiodenkörper eingearbeitete Wärmeleiter abgeführt werden.

Weitere geeignete LED-Ausführungen, die im Sinne der vorliegenden Erfindung als Lichtquellen eingesetzt werden können, umfassen das direkte Drahtbonden des Leuchtdioden-Chips auf der Platine (*chip on board*) und der spätere Verguß mit Silikonmassen.

Die als Lichtquellen eingesetzten LED können auch mehrfarbig sein. Mehrfarbige Leuchtdioden bestehen aus mehreren (zwei oder drei) Dioden in einem Gehäuse. Meist haben sie eine gemeinsame Anode oder Kathode und einen Anschluss für jede Farbe. Bei einer Ausführung mit zwei Anschlüssen sind zwei Leuchtdioden-Chips antiparallel geschaltet. Je nach Polarität leuchtet die eine oder andere Diode. Eine quasi stufenlose Farbveränderung kann man über ein variables Pulsbreitenverhältnis eines geeigneten Wechselstroms realisieren.

Der prinzipielle Aufbau der Leuchtdioden der Erfindung entspricht dem einer pn-Halbleiterdiode; Leuchtdioden besitzen daher die gleichen Grundeigenschaften wie diese. Ein großer Unterschied besteht in dem verwendeten Halbleitermaterial. Während nichtleuchtende Dioden aus Silizium, seltener aus Germanium oder Selen hergestellt werden, ist das Ausgangsmaterial für Leuchtdioden ein direkter Halbleiter, meist eine Galliumverbindung als III-V-Verbindungshalbleiter.

Wird an eine Halbleiterdiode eine Spannung in Durchlassrichtung angelegt, wandern Elektronen von der n-dotierten Seite zum p-n-Übergang. Nach Übergang zur p-dotierten Seite geht das Elektron dann in das energetisch günstigere Valenzband über. Dieser Übergang wird Rekombination genannt, denn er kann auch als Zusammentreffen von einem Elektron im Leitungsband mit einem Defektelektron (Loch) interpretiert werden. Die bei der Rekombination frei werdende Energie kann in einem direkten Halbleiter als Licht (Photon) abgegeben werden.

Neben der direkten strahlenden Rekombination ist auch die Beteiligung von Exzitonen und Phononen möglich, was zu etwas weniger energiereicher Strahlung und zu einer Verschiebung des emittierten Lichtes in den längerwelligen Bereich führt. Dieser Mechanismus spielt insbesondere bei exzitonischer Emission in grünen Galliumphosphid-Leuchtdioden eine Rolle.

Die Bandstruktur des Halbleiters bestimmt unter anderem das Verhalten der Energieübertragung beim Übergang eines Elektrons vom Leitungs- ins Valenzband und entgegengesetzt. Bei den LED, die im Rahmen der vorliegenden Erfindung geeignet sind, kommen ausschließlich direkte Halbleiter in Betracht. Diese, zeichnen sich durch einen "direkten Bandübergang" aus, was bedeutet, dass die Elektronen am unteren Rand des Leitungsbands (Leitungsbandminimum) und am oberen Ende des Valenzbands (Valenzbandmaximum) denselben Impuls haben. Damit ist ein direkter Übergang des Elektrons unter Aussendung eines Photons (Licht) möglich, ohne dass ein Phonon zur Impulserhaltung beteiligt sein muss. Die Quantenausbeute des direkten Halbleiters GaAs liegt bei ca. 0.5, beim indirekten Halbleiter Si nur bei etwa $1 \cdot 10^{-5}$.

Die Energie des emittierten Photons ist gleich der Energie der Bandlücke, also dem energetischen Abstand zwischen Leitungs- und Valenzband,

$$\lambda(W_{\mathrm{D}}) = \frac{h \cdot c}{W_{\mathrm{D}}} \qquad \text{mit} \quad W_{\mathrm{D}} = E'' - E'$$

wobei $\lambda_{(WD)}$ die Wellenlänge des emittierten Lichtes, h das Planck'sche Wirkungsquantum, c die Lichtgeschwindigkeit und $W_D$ die Arbeit darstellt.

Die Größe der Bandlücke, also der Energielücke E"-E' bestimmt die Energie, das heißt, die Frequenz, Wellenlänge bzw. Farbe, des ausgesandten Lichtes. Sie lässt sich über die chemische Zusammensetzung des Halbleiters steuern. So verändert der Austausch von Atomen im Kristallgitter den kristallinen/molekularen Aufbau des Materials, u.a. seine Gitterparameter oder sogar seine Gitterstruktur. Beispielsweise hat der Halbleiter Galliumarsenid einen direkten Bandabstand von 1,4 eV, entsprechend einer Wellenlänge von 885 nm, d.h. im Nah-IR-Bereich. Die Zugabe von Phosphor vergrößert den Bandabstand, was das ausgesandte Licht energiereicher macht, wobei die Wellenlänge abnimmt und die Farbe von Infrarot zu Rot und Gelb übergeht. Durch die Zunahme von Phosphor im Kristall verformt sich jedoch auch das Leitungsband. Wenn Phosphor 50 Prozent der Arsen-Atome ersetzt, liegt der Bandabstand zwar bei fast zwei Elektronenvolt, was einer Strahlung von 650 nm (Rot) entspricht, dafür hat sich die Bandstruktur so verschoben, dass keine direkten Strahlungsübergänge mehr beobachtet werden, wie im Beispiel rechts gezeigt. Die Energie der Bandlücke spiegelt sich auch in der Höhe der Durchlassspannung der Diode wider. Bei langwelligem Licht liegt sie bei ca. 1.5 V, bei blauem Licht bei 3 V.

Durch die gezielte Auswahl der Halbleitermaterialien und der Dotierung können die Eigenschaften des erzeugten Lichtes variiert werden. Vor allem der Spektralbereich und die Effizienz lassen sich so beeinflussen:

- Aluminiumgalliumarsenid (AlGaAs) - rot (665 nm) und infrarot bis 1000 nm Wellenlänge
- Galliumarsenidphosphid (GaAsP) und Aluminiumindiumgalliumphosphid (AlInGaP)-rot, orange und gelb
- Galliumphosphid (GaP) - grün
- Siliziumkarbid (SiC) - erste kommerzielle blaue LED;
- Zinkselenid (ZnSe) - blauer Emitter;

- Indiumgalliumnitrid (InGaN)/Galliumnitrid (GaN) - Ultraviolett, Violett, blau und grün;

Im Sinne der Erfindung sind solche LED bevorzugt, die blaues Licht emittieren, welches dann mit Hilfe einer Luminiszenzschicht, die als Wellenlängen-Konverter dient, in weißes Licht umgewandelt wird.

**OLED**

Eine besonders bevorzugte Lichtquelle im Sinne der Erfindung sind OLED. Dabei handelt es sich um organische Leuchtdioden, genauer gesagt um leuchtende Dünnschichtbauelemente aus organischen halbleitenden Materialien, das sich von den anorganischen Leuchtdioden (LED) dadurch unterscheiden, dass die elektrische Stromdichte und Leuchtdichte geringer und keine einkristallinen Materialien erforderlich sind. Im Vergleich zu herkömmlichen (anorganischen) Leuchtdioden lassen sich organische Leuchtdioden daher in Dünnschichttechnik kostengünstiger herstellen. OLEDs sind aus mehreren organischen Schichten aufgebaut. Dabei wird meist auf die Anode, bestehend aus Indium-Zinn-Oxid (ITO), die sich auf einer Glasscheibe befindet, eine Lochleitungsschicht (*hole transport layer,* HTL) aufgebracht. Zwischen ITO und HTL wird - abhängig von der Herstellungsmethode - oft noch eine Schicht aus PEDOT/PSS aufgebracht, die zur Absenkung der Injektionsbarriere für Löcher dient und die Eindiffusion von Indium in den Übergang verhindert. Auf die HTL wird eine Schicht aufgebracht, die entweder den Farbstoff enthält (ca. 5-10 %) oder-eher selten -vollständig aus dem Farbstoff besteht, z. B. Aluminium-tris(8-hydroxychinolin), Alq3. Diese Schicht bezeichnet man als Emitterschicht (*emitter layer,* EL). Auf diese wird optional noch eine Elektronenleitungsschicht (*electron transport layer,* ETL) aufgebracht. Zum Abschluss wird eine Kathode, bestehend aus einem Metall oder einer Legierung mit geringer Elektronenaustrittsarbeit wie zum Beispiel Calcium, Aluminium, Barium, Ruthenium, Magnesium-Silber-Legierung, im Hochvakuum aufgedampft. Als Schutzschicht und zur Verringerung der Injektionsbarriere für Elektronen wird zwischen Kathode und E(T)L meistens eine sehr dünne Schicht aus Lithiumfluorid, Cäsiumfluorid oder Silber aufgedampft.

Die Elektronen werden nun von der Kathode injiziert, während die Anode die "Löcher", d.h. die positive Ladung bereitstellt. Loch und Elektron driften aufeinander zu und treffen sich im Idealfall in der EL, weshalb diese Schicht auch Rekombinationsschicht genannt wird. Elektronen und Löcher bilden einen gebundenen Zustand, den man als Exziton bezeichnet. Abhängig vom Mechanismus stellt das Exziton bereits den angeregten Zustand des Farbstoffmoleküls dar, oder der Zerfall des Exzitons stellt die Energie zur Anregung des Farbstoffmoleküls zur Verfügung. Dieser Farbstoff hat verschiedene Anregungszustände. Der angeregte Zustand kann in den Grundzustand übergehen und dabei ein Photon (Lichtteilchen) aussenden. Die Farbe des ausgesendeten Lichts hängt vom Energieabstand zwischen angeregtem und Grundzustand ab und kann durch Variation der Farbstoffmoleküle gezielt verändert werden. Ein Problem stellen nichtstrahlende Triplett-Zustände dar. Diese können durch Zugabe von sogenannten "Exzitoren" wieder gelöst werden.

Anstelle der Licht emittierenden Dioden können auch entsprechende Transistoren verwendet werden, die als LET oder OLET bezeichnet werden.

Ein letzter Gegenstand der Erfindung bezieht sich auf die Verwendung der erfindungsgemäßen teilmattierten Linsen und/oder der Beleuchtungselemente zur Beleuchtung in Außenanwendungen, beispielsweise für die Straßenbeleuchtung, die Flugvorfeldbeleuchtung, die Beleuchtung von Parkhäusern und insbesondere die Tunnelbeleuchtung.

**BEISPIELE**

**Beispiele 1 bis 5**

Die Zusammensetzung verschiedener Gläser, die im Sinne der vorliegenden Erfindung zur Herstellung der optischen Linsen geeignet sind, sind in **Tabelle 1** wiedergegeben:

**Tabelle 1**

| Glaszusammensetzung | | | | | |
|---|---|---|---|---|---|
| **Komponente** | **1** | **2** | **3** | **4** | **5** |
| Siliziumdioxid | 60 | 55 | 50 | 50 | 50 |
| Titandioxid | 1 | 3 | 5 | 3 | 10 |
| Zirkondioxid | 1 | 2 | 5 | 5 | 2 |
| Calciumoxid | 10 | 10 | 10 | 12 | 10 |
| Magnesiumoxid | 3 | 5 | 13 | 3 | 10 |
| Zinkoxid | 3 | 5 | 5 | 6 | 5 |

(fortgesetzt)

| Glaszusammensetzung | | | | | |
|---|---|---|---|---|---|
| **Komponente** | **1** | **2** | **3** | **4** | **5** |
| Natriumoxid | 10 | 6 | 6 | 7 | 9 |
| Kaliumoxid | 10 | 12 | 3 | 7 | 2 |
| Lithiumoxid | 2 | 2 | 3 | 7 | 2 |

**Patentansprüche**

**1.** Optische Linsen mit mindestens einer Lichtaustrittsfläche in ellipsoidartiger Freiform, wobei die Unterseiten planar ausgeformt und mit einer optisch relevanten Ausnehmung zur Aufnahme einer Lichtquelle versehen sind, **dadurch gekennzeichnet, dass** die Linsen

(a) aus einem transparenten Material bestehen und
(b) deren Oberflächen ausgehend von der planaren Unterseite in Richtung der optischen Achse zu 1 bis 95 % mattiert sind.

**2.** Linsen nach Anspruch 1, **dadurch gekennzeichnet, dass** die Lichtaustrittsflächen über ein, zwei, drei oder vier ellipsoidartige Freiformflächen verfügen.

**3.** Linsen nach den Ansprüchen 1 und/oder 2, **dadurch gekennzeichnet, dass** sie in Richtung der optischen Achse eine Höhe von etwa 9 bis etwa 20 mm aufweisen.

**4.** Linsen nach mindestens einem der Ansprüche 1 bis 3, **dadurch gekennzeichnet, dass** sie einen Abstand der Lichteintritts- zur Lichtaustrittsfläche von etwa 2 bis etwa 10 mm aufweisen.

**5.** Linsen nach mindestens einem der Ansprüche 1 bis 4, **dadurch gekennzeichnet, dass** sie einen umlaufenden Rand oder Flansch aufweisen.

**6.** Linsen nach Anspruch 5, **dadurch gekennzeichnet, dass** der Flansch der Geometrie der Linse folgt.

**7.** Linsen nach den Ansprüchen 5 und/oder 6, **dadurch gekennzeichnet, dass** sie eine Positionierungshilfe aufweisen.

**8.** Linsen nach mindestens einem der Ansprüche 1 bis 7, **dadurch gekennzeichnet, dass** sie aus einem Material hergestellt sind, das im sichtbaren Bereich transparent ist.

**9.** Linsen nach Anspruch 8, **dadurch gekennzeichnet, dass** das Material Glas oder Kunststoff darstellt.

**10.** Linsen nach Anspruch 9, **dadurch gekennzeichnet, dass** das Material Glas darstellt, welches folgende Zusammensetzung aufweist:

(i) etwa 55 bis etwa 65 Gew.-% vierwertige Metalloxide
(ii) etwa 10 bis etwa 23 Gew.-% zweiwertige Metalloxide
(iii) etwa 12 bis etwa 22 Gew.-% einwertige Metalloxide und

mit der Maßgabe, dass sich die Mengenangaben zu 100 Gew.-% ergänzen, sowie

**11.** Verfahren zur Herstellung der Linsen nach Anspruch 1, bei dem man die Linsen

(a) zunächst soweit mit einem gegebenenfalls reversiblen Überschutz versieht und dadurch den Teil der Oberfläche schützt, für den keine Mattierung gewünscht wird,
(b) die verbliebene ungeschützte Oberfläche der Linse durch chemische oder physikalische Behandlung mattiert und
(c) gegebenenfalls den Überzug wieder entfernt.

**12.** Verfahren zur Verminderung des Color-over-Angle Effektes bei LED, bei dem man die LED mit einer Linse nach mindestens einem der Ansprüche 1 bis 10 kombiniert.

**13.** Beleuchtungselement, umfassend oder bestehend aus einem Träger, mindestens einer Lichtquelle sowie mindestens einer Linse nach mindestens einem der Ansprüche 1 bis 10.

**14.** Beleuchtungselement nach Anspruch 13, **dadurch gekennzeichnet, dass** die Lichtquelle eine LED, eine OLED oder ein LET ist.

**15.** Verwendung der Linsen nach Anspruch 1 und/oder der Beleuchtungselemente nach Anspruch 13 für Beleuchtungen in der Außenanwendung.

**Abbildung 1a**
Linse mit einer Lichtaustrittsfläche in Form von zwei elliposidartigen Freiformen - Schnitt AA

A
A

**Abbildung 1b**
Linse mit einer Lichtaustrittsfläche in Form von zwei elliposidartigen Freiformen – Aufsicht

**Abbildung 1c**
Linse mit einer Lichtaustrittsfläche in Form von zwei elliposidartigen Freiformen – Schrägsicht

**Abbildung 2a**
Linse mit einer Lichtaustrittsfläche in Form von zwei elliposidartigen Freiformen - Schnitt AA

A
A

**Abbildung 2b**
Linse mit einer Lichtaustrittsfläche in Form von zwei elliposidartigen Freiformen – Aufsicht

**Abbildung 2c**
Linse mit einer Lichtaustrittsfläche in Form von zwei elliposidartigen Freiformen - Schrägsicht

**Abbildung 3a**
Linse mit einer Lichtaustrittsfläche in Form von zwei elliposidartigen Freiformen - Schnitt AA

A
A

**Abbildung 3b**
Linse mit einer Lichtaustrittsfläche in Form von zwei elliposidartigen Freiformen – Aufsicht

**Abbildung 3c**
Linse mit einer Lichtaustrittsfläche in Form von zwei elliposidartigen Freiformen - Schrägsicht

# EUROPÄISCHER RECHERCHENBERICHT

Nummer der Anmeldung
EP 14 17 5894

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X<br><br>Y | US 2013/094218 A1 (WANG CHIH-PENG [TW] ET AL) 18. April 2013 (2013-04-18)<br>* Abbildung 3 *<br>* Absatz [0001] *<br>* Absatz [0049] - Absatz [0055] *<br>----- | 1-9, 13-15<br>10-12 | INV.<br>G02B19/00<br>C03C3/078<br>F21V5/04<br>B24C1/04 |
| X<br><br>Y | US 2014/003059 A1 (WANG CHIH-PENG [TW] ET AL) 2. Januar 2014 (2014-01-02)<br>* Absatz [0052] - Absatz [0056] *<br>* Abbildung 6 *<br>----- | 1-9, 13-15<br>10-12 | |
| X | EP 2 518 395 A2 (PANASONIC CORP [JP]) 31. Oktober 2012 (2012-10-31)<br>* Absatz [0051] - Absatz [0052] *<br>* Abbildung 8 *<br>----- | 1-9, 13-15 | |
| X | US 2012/014115 A1 (PARK KWANG IL [KR] ET AL) 19. Januar 2012 (2012-01-19)<br>* Absatz [0059] - Absatz [0064] *<br>* Abbildungen 8-10 *<br>----- | 1-9, 13-15 | |
| X | US 2010/208468 A1 (LEE SUN-HWA [KR] ET AL) 19. August 2010 (2010-08-19)<br>* Absatz [0030] - Absatz [0038] *<br>* Abbildungen 2a-4b *<br>----- | 1-9, 13-15 | RECHERCHIERTE SACHGEBIETE (IPC)<br>G02B<br>C03C<br>F21V<br>B24C |
| X | US 2009/135581 A1 (YANO TADASHI [JP] ET AL) 28. Mai 2009 (2009-05-28)<br>* Absatz [0070] - Absatz [0078] *<br>* Abbildungen 2-5 *<br>----- | 1-9, 13-15 | |
| Y | DE 10 2010 042945 A1 (SCHOTT AG [DE]) 26. April 2012 (2012-04-26)<br>* Absatz [0144] *<br>* Absatz [0001] *<br>----- | 10 | |
| Y | US 5 833 517 A (KONDA AKINOBU [JP] ET AL) 10. November 1998 (1998-11-10)<br>* Spalte 7, Zeile 8 - Zeile 56 *<br>----- | 11,12 | |

1

Der vorliegende Recherchenbericht wurde für alle Patentansprüche erstellt

| Recherchenort | Abschlußdatum der Recherche | Prüfer |
|---|---|---|
| München | 17. November 2014 | von Hentig, Roger |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 17 5894

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2014

| Im Recherchenbericht angeführtes Patentdokument | Datum der Veröffentlichung | Mitglied(er) der Patentfamilie | Datum der Veröffentlichung |
|---|---|---|---|
| US 2013094218 A1 | 18-04-2013 | CN 103062707 A | 24-04-2013 |
| | | TW 201216529 A | 16-04-2012 |
| | | US 2013094218 A1 | 18-04-2013 |
| US 2014003059 A1 | 02-01-2014 | CN 103511987 A | 15-01-2014 |
| | | TW 201303362 A | 16-01-2013 |
| | | US 2014003059 A1 | 02-01-2014 |
| EP 2518395 A2 | 31-10-2012 | CN 102760823 A | 31-10-2012 |
| | | EP 2518395 A2 | 31-10-2012 |
| | | JP 2012234906 A | 29-11-2012 |
| | | US 2012275150 A1 | 01-11-2012 |
| US 2012014115 A1 | 19-01-2012 | CN 102696123 A | 26-09-2012 |
| | | JP 2013516785 A | 13-05-2013 |
| | | TW 201140893 A | 16-11-2011 |
| | | US 2012014115 A1 | 19-01-2012 |
| | | US 2014071696 A1 | 13-03-2014 |
| | | WO 2011084001 A2 | 14-07-2011 |
| US 2010208468 A1 | 19-08-2010 | CN 101807652 A | 18-08-2010 |
| | | KR 20100093852 A | 26-08-2010 |
| | | US 2010208468 A1 | 19-08-2010 |
| US 2009135581 A1 | 28-05-2009 | CN 1922740 A | 28-02-2007 |
| | | JP 3897806 B2 | 28-03-2007 |
| | | US 2009135581 A1 | 28-05-2009 |
| | | US 2011006673 A1 | 13-01-2011 |
| | | WO 2005067066 A1 | 21-07-2005 |
| DE 102010042945 A1 | 26-04-2012 | CN 103189323 A | 03-07-2013 |
| | | DE 102010042945 A1 | 26-04-2012 |
| | | EP 2632867 A2 | 04-09-2013 |
| | | JP 2013543832 A | 09-12-2013 |
| | | KR 20130083456 A | 22-07-2013 |
| | | US 2013276880 A1 | 24-10-2013 |
| | | WO 2012055860 A2 | 03-05-2012 |
| US 5833517 A | 10-11-1998 | JP H08160229 A | 21-06-1996 |
| | | US 5833517 A | 10-11-1998 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7361938 B2, MÜLLER
- WO 2011010237 A1, PHILIPS


### In der Beschreibung aufgeführte Nicht-Patentliteratur


- **WU et al.** Improving the performance of mixed-color white LED systems by using scattered photon extraction technique. *Proc. SPIE,* 2007, vol. 6669